# EUROPÄISCHE PATENTSCHRIFT

(11) **EP 1 652 702 B1**
(45) Veröffentlichungstag und Bekanntmachung des Hinweises auf die Patenterteilung: **20.05.2009**
(21) Anmeldenummer: 05023063.0
(22) Anmeldetag: 21.10.2005
(51) Int. Cl.: B60H 1/00, F28D 20/00

(54) **Klimaanlage mit Kältespeicher**
Air conditioning device with cold accumulator
Appareil de climatisation avec accumulateur de froid

(30) Priorität: 29.10.2004 DE 102004052979; 19.08.2005 DE 102005039589
(43) Veröffentlichungstag der Anmeldung: 03.05.2006
(73) Patentinhaber: Behr GmbH & Co. KG, 70469 Stuttgart (DE)
(72) Erfinder: Kohl, Michael, Dipl.-Ing., 74321 Bietigheim (DE); Manski, Ralf, Dipl.-Ing., 70197 Stuttgart (DE); Strauss, Thomas, Dipl.-Ing., 73274 Notzingen (DE)
(74) Vertreter: Grauel, Andreas

(56) Entgegenhaltungen:
- EP-A- 1 508 462
- DE-A1- 10 140 630
- DE-A1- 19 948 943
- DE-C1- 19 851 402
- FR-A- 2 851 503
- FR-A- 2 861 166
- US-A1- 2002 088 246
- US-A1- 2004 104 020
- US-B1- 6 260 376

## Beschreibung

Die Erfindung betrifft eine Klimaanlage mit Kältespeicher für ein Kraftfahrzeug gemäß dem Oberbegriff des Anspruches 1. US 2002/088 246 A1 offenbart eine solche Klimaanlage.

Es ist ein Ziel der Kraftfahrzeughersteller, den Kraftstoffverbrauch des Fahrzeugs zu reduzieren. Eine Maßnahme zur Reduzierung des Kraftstoffverbrauchs ist das Abschalten des Motors bei vorübergehendem Stillstand, beispielsweise beim Halten an einer Ampel. Dieses vorübergehende Abschalten des Motors wird auch Idle-stop-Betrieb genannt. Diese Maßnahme wird bei heutigen verbrauchsarmen Fahrzeugen, wie beispielsweise bei dem sogenannten Dreiliter-Fahrzeug, bereits eingesetzt. Bei Fahrzeugen, die über den Idle-stop-Betriebsmodus verfügen, ist im innerstädtischen Verkehr ca. 25-30 % der Fahrzeit der Motor ausgeschaltet.

Dies ist ein Grund, warum derartige Fahrzeuge nicht mit einer Klimaanlage ausgerüstet sind, denn bei Motorstillstand kann auch ein für eine Klimaanlage notwendiger Kompressor nicht angetrieben werden, so dass im Idie-stop-Betrieb eine Klimaanlage die notwendige Kälteleistung nicht bereitstellen kann.

In der DE 101 56 944 A1 ist eine Klimaanlage für ein Kraftfahrzeug mit in einem Kältemittelkreis angeordnetem Kompressor und Verdampfer zum Abkühlen von zu konditionierender Luft für den Innenraum offenbart, welche einen zweiten Verdampfer zum Abkühlen der Luft aufweist, der zusätzlich ein Kältespeichermedium enthält, wobei die zu konditionierende Luft wahlweise durch jeden Verdampfer einzeln oder durch beide Verdampfer gemeinsam leitbar ist. Gemäß einer alternativen Ausführungsform ist an Stelle des zweiten Verdampfers der Verdampfer derart ausgebildet, dass er zwei Teilbereiche aufweist, und in einem der beiden Teilbereiche ein Kältespeichermedium enthält, wobei die zu konditionierende Luft wahlweise durch jeden Verdampfer einzeln oder durch beide Verdampfer gemeinsam leitbar ist. Dabei können die Rohre, in welchen das Kältemittel durch den Verdampfer strömt, als Mehrkanalrohre ausgebildet sein, wobei einer oder mehrere der Kanäle mit dem Kältespeichermedium gefüllt sind. Das Befüllen ist jedoch relativ aufwändig, so dass entsprechende Klimaanlagen noch Wünsche offen lassen.

Ausgehend von US 2002/028 246 A1 ist es Aufgabe der Erfindung, eine verbesserte Klimaanlage zur Verfügung zu stellen. Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist eine Klimaanlage mit Kältespeicher für ein Kraftfahrzeug vorgesehen mit einem Kältemittelkreislauf, der einen Verdampfer, welcher zum Abkühlen von zu konditionierender Luft für den Innenraum dient, wobei ein in einem Kältespeicher enthaltenes Kältespeichermedium vorgesehen ist, das im Bereich des Verdampfers angeordnet ist, mindestens ein Expansionsorgan und mindestens einen Sammler aufweist, wobei in mindestens einem Kältespeicherelement mindestens ein kälfiemittelführendes Rohr angeordnet ist. Die Anordnung des kältemittelführenden Rohres in einem Kältespeicherelement ergibt einen sehr guten Wärmeübergang, so dass das Kältespeichermedium schnell einen Phasenwechsel durchlaufen kann. Dabei kann das mit kältemittelführende Rohr in das mit dem Kältespeichermedium befüllte Kältespeicherelement eingesteckt sein oder aber direkt hierin ausgebildet sein, wobei das Kältespeichermedium bevorzugt das Kältemittel von allen Seiten umgibt, wobei insbesondere eine Rohr-in-Rohr-Anordnung vorgesehen ist.

Das kältemittelführende und das Kältespeichermedium enthaltende Rohr ist als ein doppelwandiges Flachrohr ausgebildet, wobei sich das Kältemittel im zentralen Bereich und das Kältespeichermedium im äußeren Bereich befindet. Gemäß einer bevorzugten Ausführungsform weist das doppelwandige Flachrohr Stege auf, die das außen liegende mit dem innen liegenden Flachrohr verbinden. Dadurch, dass der Kältespeicher direkten Luftkontakt hat, ergibt sich eine sehr gute Dynamik beim Wärmeübergang, so dass im Bedarfsfall, d.h. im Idle-stop-Betrieb, die volle Kälteleistung sofort zur Verfügung steht.

Das kältemittelführende Rohr beziehungsweise die kältemittelführenden Kanäle des Rohres endeten in einem Sammler. Zwei Sammler sind vorgesehen, wobei die Sammler und die kältemittelführenden Rohre einen verdampferartigen Aufbau aufweisen, so dass sie eine Art zweiten Verdampfer bilden, und der Zwischenraum der kältemittelführenden Rohre von dem Fahrzeuginnenraum zuzuführender Luft durchströmbar ist. Ebenfalls enden die kältespeichermediumführenden Rohre beziehungsweise Kanäle in einem getrennt hiervon ausgebildeten Kältespeichermedium-Sammelbehälter. Dies ermöglicht eine gemeinsame Befüllung mit dem Kältespeichermedium, so dass eine einfache und schnelle Befüllung der kältespeichermediumführenden Rohre beziehungsweise Kanäle möglich ist. Die Ausgestaltung kann derart sein, dass erster und zweiter Verdampfer einstückig ausgebildet sind, d.h. der zweite Verdampfer mit dem Kältespeicher ist in den ersten Verdampfer integriert.

Bevorzugt fluchten Flachrohrreihen des Verdampfers und die Rohre, in welchen die Kältespeicherelemente integriert sind, miteinander, so dass der Luftströmungswiderstand möglichst gering ist, jedoch können die Flachrohrreihen auch versetzt angeordnet sein, oder die Rohre, in welchen die Kältespeicherelemente integriert sind, können gegenüber den Flachrohren des Verdampfers verdreht angeordnet sein. Eine mehrflutige Ausgestaltung der Rohre, in welchen die Kältespeicherelemente integriert sind, d.h. mehrere Reihen mit kältespeichermediumführenden Rohren, ist ebenfalls möglich, wie deren Umlenkungen in der Breite und/oder Tiefe.

Der integrierte Kältespeicher ist bevorzugt in normaler Luftströmungsrichtung gesehen nach dem Verdampfer, insbesondere direkt in Anschluss an den Verdampfer, angeordnet, aber es ist ebenfalls eine Anordnung vor dem Verdampfer oder in den Verdampfer integriert, insbesondere bei einem zweireihigen Verdampfer zwischen den beiden Flachrohrreihen, oder beabstandet vom Verdampfer möglich. Insbesondere im Falle einer beabstandeten Anordnung vom Verdampfer kann die Größe des Sammlers mit Kältespeicher entsprechend dem vorhandenen Bauraum und/oder den Erfordernissen angepasst werden. Besonders vorteilhaft ist, dass der bestehende Verdampfer nicht abgeändert werden muss, so dass eine relativ einfache Integration des Kältespeichers in bestehende Systeme möglich ist.

Der Kältespeicher besteht bevorzugt aus Aluminium, insbesondere innen und/oder außen beschichtetem Aluminium, gegebenenfalls auch Kupfer, einer Kupfer-Zink-Legierung, Kunstharz oder Kunststoff. Ein Aluminium-Behälter hat den Vorteil, dass er sich mit den übrigen Teilen des Verdampfers problemlos verlöten lässt. Dabei handelt es sich bevorzugt um ein stranggepresstes Flachrohr, das eine Mehrzahl von Kanälen aufweist, wobei ein Teil der Kanäle das Kältespeichermedium und der andere Teil der Kanäle das Kältemittel enthalten.

Beim Speichermedium handelt es sich bevorzugt um ein PCM-Material (phase change material), das bevorzugt kongruent schmelzende Clathrade, wie Decanol, Tetra-Penta-Hexadecan, LiC-lO₃3H₂O, wässrige Salzlösungen oder organische Hydrate enthält oder hieraus gebildet ist. Das Speichermedium wird insbesondere bevorzugt durch Trimethylethan mit Wasser und Harnstoff-Zusätzen gebildet. Im Speichermedium können auch Keimbildner vorgesehen sein, welche die Kristallbildung beschleunigen.

Die Phasenumwandlungstemperatur des Speichermediums liegt vorzugsweise in einem Bereich von 0°C bis 30°C, insbesondere von 2°C bis 15°C, insbesondere bevorzugt von 4°C bis 12°C.

Im Inneren des Kältespeicherelements können Einlagen, wie Rippenbleche, vorzugsweise aus Aluminium, jedoch sind auch andere Metalle oder Kunststoffe geeignet, oder andere Turbulenzeinlagen, wie Vliese oder Gestricke, bspw. aus Kunststoff oder Metall, oder Schäume, bspw. Metallschäume oder Kunststoffschäume, vorgesehen sein. Die Einlagen dienen einer Be- oder Verhinderung einer Strömungsausbildung des Kältespeichermediums.

Bevorzugt sind im Kältemittel-Kreislauf zwei Expansionsorgane, insbesondere bevorzugt thermostatische Expansionsventile, vorgesehen. Hierbei ist eines der Expansionsorgane dem Verdampfer und das andere Expansionsorgan dem Kältemittelstrom zugeordnet, welcher mit dem Kältespeicher in Verbindung steht, so dass im Normalebetrieb fast der gesamte Kältemittelmassenstrom dem Verdampfer zur Verfügung steht und der Kältemittelmassenstrom entlang dem Kältespeicher minimal ist. Im Idie-stop-Betrieb ist jedoch eine ausreichende Kältemittelversorgung des Kältespeichers gewährleistet.

Andere Regelungen sind ebenfalls möglich, insbesondere kann auch eine durchgehende Ausgestaltung des Verdampfers mit integriertem Kältespeicher vorgesehen sein, so dass nur ein Kältemitteleintritt und -austritt und somit ein Expansionsorgan vorgesehen ist. Hierbei ist der Kältemittelaustritt bevorzugt am Sammler des Verdampferbereichs, in welchem der Kältespeicher angeordnet ist, vorgesehen.

Im Folgenden wird die Erfindung anhand eines Ausführungsbeispiels mit Varianten unter Bezugnahme auf die Zeichnung im Einzelnen erläutert. Es zeigen:

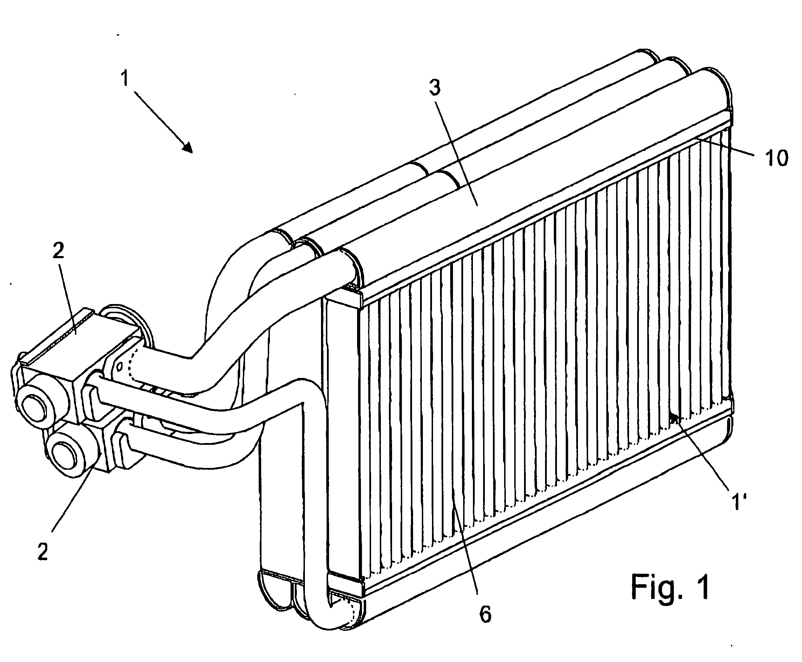

- Fig.1 1: eine perspektivische Ansicht eines Wärmetauschers mit Sammler und Expansionsventilen,
- Fig. 2: eine perspektivische Ansicht des Wärmetauschers mit Sammler von Fig. 1 mit abgenommenen oberen Sammelkästen,
- Fig. 3: einen Schnitt quer durch den oberen Bereich des Sammlers,
- Fig. 4: einen Schnitt in Längsrichtung durch den oberen Bereich des Sammlers, und
- Fig. 5: einen Schnitt in Längsrichtung durch den Sammler.

Eine Kraftfahrzeug-Klimaanlage zum Temperieren des Kraftfahrzeug-Innenraums mit einem Kältemittel-Kreislauf, von der nur der Verdampfer 1, zwei thermostatische Expansionsventile 2 zur Regelung von Kältemitteldruck und -temperatur und ein in den Verdampfer 1 integrierter Sammler 3 dargestellt sind, weist, um auch bei einem Motorstopp zumindest über einen kurzen Zeitraum eine ausreichende Kühlleistung zur Verfügung zu stellen, einen Kältespeicher 4 auf, bestehend aus einer Mehrzahl von Kältespeicherelementen 5, welche mit einem Kältespeichermedium gefüllt sind. Die Kältespeicherelemente 5 sind durch Bereiche speziell ausgestalteter Flachrohre 6 aus Aluminium gebildet, auf welche an späterer Stelle näher eingegangen wird. Als Kältespeichermedium dient vorliegend Tetradecan. Alternativ sind insbesondere auch Penta- oder Hexadecan geeignet.

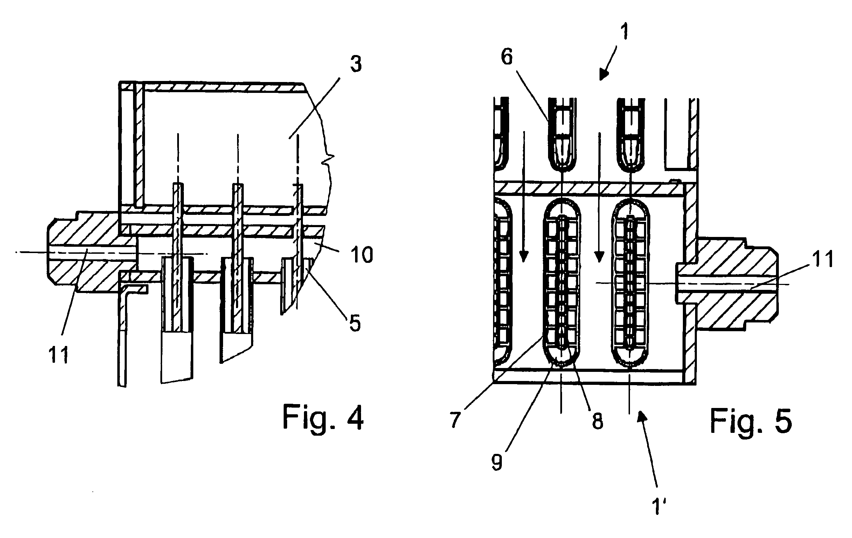

Der Verdampfer 1 weist einen im Wesentlichen herkömmlichen Aufbau mit zwei Reihen von Flachrohren 7 und dazwischen angeordneten Wellrippen (nicht dargestellt) auf. Der Kältespeicherbereich, welcher als eigenständiger zweiter Verdampfer 1' ausgebildet ist und in welchem die Kältespeicherelemente 5 vorgesehen sind, ist auf der Rückseite desselben, das heißt auf der in normaler Luftströmungsrichtung hinten liegenden Seite des Verdampfers 1, angeordnet. Die normale Luftströmungsrichtung ist in Fig. 5 durch Pfeile angedeutet. Die Kältespeicher-Flachrohre 6 im Kältespeicherbereich zwischen den beiden Sammlern 3 und die herkömmlichen Flachrohre 7 des Verdampfers 1 sind jeweils in einer Reihe angeordnet, so dass ein möglichst geringer Strömungswiderstand für die den Verdampfer 1 und den Kältespeicherbereich durchströmende Luft gegeben ist (vgl. Fig. 5).

Die Kältespeicher-Flachrohre 6 weisen einen doppelwandigen Aufbau mit einer Mehrzahl von Kältemittel-Kanälen 8 und Kältespeichermedium-Kanälen 9 auf, wobei die Kältemittel-Kanäle 8 innen angeordnet sind. Dabei sind die Kältespeicher-Flachrohre 6 derart angeordnet, dass die als Kältespeicherelemente 5 dienenden Kältespeichermedium-Kanäle 9 in einem Kältespeichermedium-Sammelbehäfter 10 enden, so dass das Kältespeicherelement 5 nur einen einzigen Hohlraum aufweist, welcher vollständig mit dem Kältespeichermedium gefüllt ist. Das Befüllen erfolgt über eine Öffnung 11 im Kältespeichermedium-Sammelbehälter 10 in einem einzigen Arbeitsgang.

Nach dem Befüllen wird die Öffnung fest verschlossen, so dass ein unbefugtes Öffnen sicher verhindert wird.

Im Inneren des durchgehenden Hohlraums sind gemäß einer nicht in der Zeichnung dargestellten Variante Elemente zur Verhinderung einer Strömungsausbildung vorgesehen sein, wie vorliegend ein Kunststoff-Vlies.

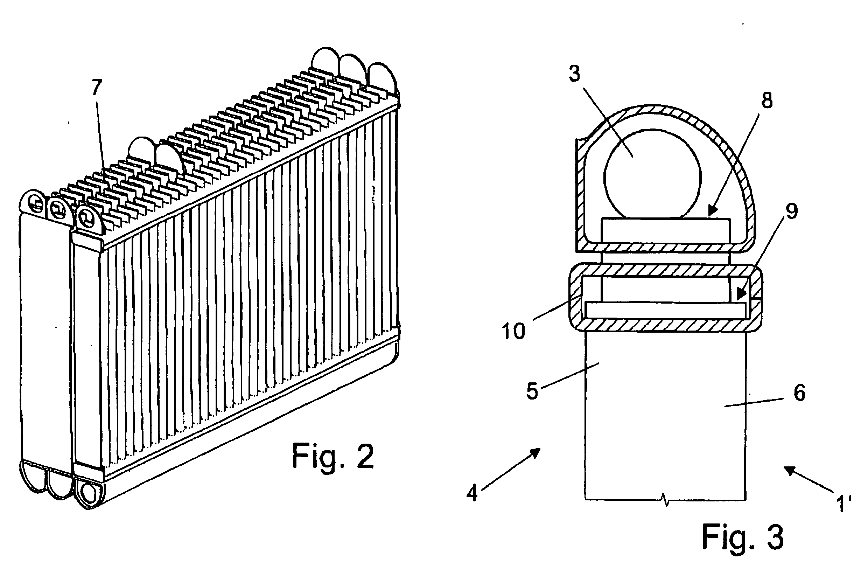

Die Kältemittel-Kanäle 8 ragen durch den Kältespeichermedium-Sammelbehälter 10 hindurch und enden beidseitig im entsprechenden Sammler 3 (vgl. Fig. 3 und 4).

Vorliegend haben der Verdampfer 1 und die Flachrohre 6, in welchen die Kältespeicherelemente 5 integriert sind, und deren Sammler 3 eigene Anschlüsse, das heißt es ist je ein Ein- und Austritt vorgesehen. Die selbsttätige Regelung der Kältemitteltemperatur und des -drucks erfolgt durch je eines der thermostatischen Expansionsventile 2, wobei auch andere Regelorgane vorgesehen sein können. Dies stellt sicher, dass im Bedarfsfall eine ausreichende Durchströmung mit Kältemittel erfolgt. Ist der Kältemittelspeicher 3 beladen, so regelt das Expansionsventil 2 selbsttätig ab, so dass der Kältemittelstrom auf ein Minimum reduziert wird, so dass dem eigentlichen Verdampfer 1 fast der gesamte Kältemittelmassenstrom zur Verfügung steht.

Gemäß einer weiteren Variante ist der in Flachrohren integrierte Kältespeicher zwischen zwei Flachrohrreihen des Verdampfers angeordnet. Ebenfalls ist eine Anordnung des Kältespeichers in normaler Luftströmungsrichtung gesehen vor dem Verdampfer möglich.

### Bezugszeichenliste

- 1: Verdampfer
- 1': zweiter Verdampfer
- 2: Expansionsventil
- 3: Sammler
- 4: Kältespeicher
- 5: Kältespeicherelement
- 6: Flachrohr (zweiter Verdampfer)
- 7: Flachrohr (erster Verdampfer)
- 8: Kältemittel-Kanal
- 9: Kättespeichermedium-Kanal
- 10: Kältespeichermedium-Sammelbehälter
- 11: Öffnung

## Patentansprüche

1. Klimaanlage mit Kältespeicher (4) für ein Kraftfahrzeug mit einem Kältemittelkreislauf, der einen Verdampfer (1), welcher zum Abkühlen von zu konditionierender Luft für den Innenraum dient, wobei ein in einem Kältespeicherelement (5) enthaltenes Kältespeichermedium vorgesehen ist, das im Bereich des Verdampfers (1) angeordnet ist, mindestens ein Expansionsorgan (2) und mindestens einen Sammler (3) aufweist, wobei in mindestens einem Kältespeicherelement (5) mindestens ein kältemittelführendes Rohr angeordnet ist, wobei das kältemittelführende und das Kältespeichermedium enthaltende Rohr ein doppelwandiges Rohr (6) ist, wobei sich das Kältemittel im zentralen Bereich und das Kältespeichermedium im äußeren Bereich befindet oder das kältemittelführende und das Kältespeichermedium enthaltende Rohr durch zwei getrennt ausgebildete Rohre gebildet ist, die ineinander geschoben sind, **dadurch gekennzeichnet, dass** das Rohr ein Flachrohr ist und wobei weiterhin das kältemittelführende Rohr in einem Sammler (3) endet und die kältespeichermediumführenden Rohre beziehungsweise Kanäle in einem Kältespeichermedium-Sammelbehälter (10) enden.

2. Klimaanlage nach einem der vorhergehenden Ansprüche, **dadurch gekennzeichnet, dass** das Kältespeicherelement (5) in einem zweiten Verdampfer (1') angeordnet ist.

3. Klimaanlage nach einem der vorhergehenden Ansprüche, **dadurch gekennzeichnet, dass** zwei Sammler (3) vorgesehen sind, wobei die Sammler (3) und die kältemittelführenden Rohre einen zweiten Verdampfer (1') bilden und der Zwischenraum der kältemittelführenden Rohre von dem Fahrzeuginnenraum zuzuführender Luft durchströmbar ist.

4. Klimaanlage nach einem der vorhergehenden Ansprüche, **dadurch gekennzeichnet, dass** das oder die Kältespeicherelemente (5) mit kältemittelführendem Rohr bzw. Rohren in normaler Luftströmungsrichtung gesehen nach dem ersten Verdampfer (1) angeordnet sind.

5. Klimaanlage nach Anspruch 4, **dadurch gekennzeichnet, dass** die Reihen von Flachrohren (7) oder Scheiben des Verdampfers (1) und die Reihe oder Reihen von Flachrohren (6) des Sammlers (3) miteinander fluchten.

6. Klimaanlage nach einem der vorhergehenden Ansprüche, **dadurch gekennzeichnet, dass** das oder die Kältespeicherelemente (5) mit kältemittelführendem Rohr bzw. Rohren mit dem Sammler (3) verlötet sind.

7. Klimaanlage nach einem der vorhergehenden Ansprüche, **dadurch gekennzeichnet, dass** der Kältespeicher (4) aus Aluminium, insbesondere beschichtetem Aluminium, besteht.

8. Klimaanlage nach einem der vorhergehenden Ansprüche, **dadurch gekennzeichnet, dass** das Kältespeichermedium durch ein PCM-Material gebildet ist.

9. Klimaanlage nach einem der vorhergehenden Ansprüchen, **dadurch gekennzeichnet, dass** die Phasenumwandlungstemperatur des Kältespeichermediums in einem Bereich von 0°C bis 30°C, insbesondere von 2°C bis 15°C, insbesondere bevorzugt von 4°C bis 12°C, liegt.

10. Klimaanlage nach einem der vorhergehenden Ansprüche, **dadurch gekennzeichnet, dass** im Kältespeicher (4) mindestens eine Einlage angeordnet ist.

11. Klimaanlage nach Anspruch 10, **dadurch gekennzeichnet, dass** die Einlage durch ein Rippenblech, ein Vlies, ein Gestrick oder einen Schaum gebildet ist.

12. Klimaanlage nach einem der vorhergehenden Ansprüche, **dadurch gekennzeichnet, dass** im Kältemittel-Kreislauf zwei Expansionsorgange (2) vorgesehen sind, wobei ein Expansionsorgan (2) dem Verdampfer (1) und ein Expansionsorgan (2) dem Kältemittelstrom zugeordnet ist, welches in Kontakt mit dem Kältespeicher (4) ist.

13. Klimaanlage nach einem der vorhergehenden Ansprüche, **dadurch gekennzeichnet, dass** der Kältespeicher (4) in einen eigenständigen Verdampfer (1'), der vom gleichen Kältemittel wie der Verdampfer (1) durchströmt wird, integriert ist, wobei die beiden Verdampfer (1, 1') miteinander verbunden sind, aber getrennte Kältemittelzu- und -ableitungen aufweisen.

## Claims

1. Air conditioning system with cold accumulator (4) for a motor vehicle, with a refrigerant circuit comprising an evaporator (1) for cooling the air to be conditioned for the interior, wherein there is provided a cold accumulator medium in a cold accumulator element (5) in the region of the evaporator (1), further comprising at least one expansion device (2) and at least one header (3), wherein at least one cold accumulator element (5) accommodates at least one refrigerant-carrying pipe, the refrigerant-carrying pipe containing the cold accumulator medium being a double-walled pipe (6), wherein the refrigerant is placed in the central region and the cold accumulator medium is placed in the outer region, or the refrigerant-carrying pipe containing the cold accumulator medium being represented by two separate pipes pushed into one another, **characterised in that** the pipe is a flat tube and **in that** the refrigerant-carrying pipe terminates in a header (3) and the pipes or passages carrying the cold accumulator medium terminate in a cold accumulator medium receiver (10).

2. Air conditioning system according to any of the preceding claims, **characterised in that** the cold accumulator element (5) is provided in a second evaporator (1').

3. Air conditioning system according to any of the preceding claims, **characterised in that** two headers (3) are provided, wherein the headers (3) and the refrigerant-carrying pipes form a second evaporator (1') and air to be fed into the vehicle interior can flow through the space between the refrigerant-carrying pipes.

4. Air conditioning system according to any of the preceding claims, **characterised in that** the cold accumulator element(s) (5) with the refrigerant-carrying pipe(s) is (are) arranged downstream of the first evaporator (1) as viewed in the normal direction of air flow.

5. Air conditioning system according to claim 4, **characterised in that** the rows of flat tubes (7) or discs of the evaporator (1) and the row(s) of flat tubes (6) of the header (3) are in alignment with one another.

6. Air conditioning system according to any of the preceding claims, **characterised in that** the cold accumulator element(s) (5) with refrigerant-carrying pipe(s) is (are) soldered to the header (3).

7. Air conditioning system according to any of the preceding claims, **characterised in that** the cold accumulator (4) is made of aluminium, in particular of coated aluminium.

8. Air conditioning system according to any of the preceding claims, **characterised in that** the cold accumulator medium is a PCM material.

9. Air conditioning system according to any of the preceding claims, **characterised in that** the phase change temperature of the cold accumulator medium lies in a range between 0°C and 30°C, in particular between 2°C and 15°C, preferably between 4°C and 12°C.

10. Air conditioning system according to any of the preceding claims, **characterised in that** at least one insert is provided in the cold accumulator (4).

11. Air conditioning system according to claim 10, **characterised in that** the insert is represented by a ribbed sheet, a non-woven fabric, a knitted fabric or a foam material.

12. Air conditioning system according to any of the preceding claims, **characterised in that** two expansion devices (2) are provided in the refrigerant circuit, one expansion device (2) being assigned to the evaporator (1) and one expansion device (2) being assigned to the refrigerant flow and in contact with the cold accumulator (4).

13. Air conditioning system according to any of the preceding claims, **characterised in that** the cold accumulator (4) is integrated into an independent evaporator (1') through which the same refrigerant flows as through the evaporator (1), the two evaporators (1, 1') being connected to one another but having separate refrigerant supply and discharge lines.

## Revendications

1. Système de climatisation comprenant un accumulateur de froid (4) pour un véhicule automobile, comportant un circuit de fluide frigorigène qui présente un évaporateur (1) qui sert au refroidissement de l'air à climatiser pour l'habitacle, où il est prévu un milieu d'accumulateur de froid contenu dans un élément (5) de l'accumulateur de froid, milieu de l'accumulateur de froid qui est disposé dans la zone de l'évaporateur (1), lequel circuit de fluide frigorigène présente au moins un détendeur (2) et au moins un collecteur (3), où au moins un tube fournissant le fluide frigorigène est disposé dans au moins un élément (5) de l'accumulateur de froid, où le tube fournissant le fluide frigorigène et contenant le milieu de l'accumulateur de froid est un tube (6) à double paroi, où le fluide frigorigène se trouve dans la zone centrale, le milieu de l'accumulateur de froid se trouvant dans la zone extérieure, ou bien le tube fournissant le fluide frigorigène et contenant le milieu de l'accumulateur de froid est formé par deux tubes configurés séparément qui sont emboîtés l'un dans l'autre,
**caractérisé en ce que** le tube est un tube plat et où, en outre, le tube fournissant le fluide frigorigène se termine dans un collecteur (3), et les tubes ou les conduits fournissant le milieu de l'accumulateur de froid se terminent dans un récipient collecteur (10) du milieu de l'accumulateur de froid.

2. Système de climatisation selon la revendication 1, **caractérisé en ce que** l'élément (5) de l'accumulateur de froid est disposé dans un deuxième évaporateur (1').

3. Système de climatisation selon l'une ou l'autre des revendications précédentes, **caractérisé en ce qu'**il est prévu deux collecteurs (3), où les collecteurs (3) et les tubes fournissant le fluide frigorigène forment un deuxième évaporateur (1'), et l'espace intermédiaire formé entre les tubes fournissant le fluide frigorigène peut être traversé par de l'air à fournir à l'habitacle du véhicule.

4. Système de climatisation selon l'une quelconque des revendications précédentes, **caractérisé en ce que** le ou les éléments (5) de l'accumulateur de froid comportant un tube ou des tubes fournissant le fluide frigorigène est ou sont, vu(s) dans une direction normale d'écoulement de l'air, disposé(s) en aval du premier évaporateur (1).

5. Système de climatisation selon la revendication 4, **caractérisé en ce que** les rangées de tubes plats (7) ou de planques de l'évaporateur (1) et la rangée ou les rangées de tubes plats (6) du collecteur (3) sont alignées entre elles.

6. Système de climatisation selon l'une quelconque des revendications précédentes, **caractérisé en ce que** le ou les éléments (5) de l'accumulateur de froid comportant un tube ou des tubes fournissant le fluide frigorigène est ou sont brasé(s) au collecteur (3).

7. Système de climatisation selon l'une quelconque des revendications précédentes, **caractérisé en ce** e que l'accumulateur de froid (4) est en aluminium, en particulier en aluminium planqué.

8. Système de climatisation selon l'une quelconque des revendications précédentes, **caractérisé en ce que** le milieu de l'accumulateur de froid est formé par une matière du type à changement de phase (PCM).

9. Système de climatisation selon l'une quelconque des revendications précédentes, **caractérisé en ce que** la température de changement de phase du milieu de l'accumulateur de froid est dans une zone comprise entre 0°C et 30°C, en particulier entre 2°C et 15°C, en particulier de préférence entre 4°C et 12°C.

10. Système de climatisation selon l'une quelconque des revendications précédentes, **caractérisé en ce qu'**au moins une couche intermédiaire est disposée dans l'accumulateur de froid (4).

11. Système de climatisation selon la revendication 10, **caractérisé en ce que** la couche intermédiaire est formée par une tôle nervurée, un tissu non tissé, un tissu tricoté ou une mousse.

12. Système de climatisation selon l'une quelconque des revendications précédentes, **caractérisé en ce qu'**il est prévu deux détendeurs (2) dans le circuit de fluide frigorigène, où un détendeur (2) est associé à l'évaporateur (1) et un détendeur (2) associé au flux de fluide frigorigène, détendeur qui est en contact avec l'accumulateur de froid (4).

13. Système de climatisation selon l'une quelconque des revendications précédentes, **caractérisé en ce que** l'accumulateur de froid (4) est intégré à un évaporateur indépendant (1') qui est traversé par le même fluide frigorigène que l'évaporateur (1), où les deux évaporateurs (1, 1') sont reliés l'un à l'autre mais présentent des conduites d'alimentation et d'évacuation du fluide frigorigène qui sont séparées.
